# EUROPÄISCHE PATENTSCHRIFT

(11) **EP 2 905 156 B1**
(45) Veröffentlichungstag und Bekanntmachung des Hinweises auf die Patenterteilung: **22.08.2018**
(21) Anmeldenummer: 14004252.4
(22) Anmeldetag: 17.12.2014
(51) Int. Cl.: B60G 17/018, B60G 17/0165

(54) **Verfahren zum Betrieb eines aktiven Fahrwerksystems eines Kraftfahrzeugs und Kraftfahrzeug**
Method for operating an active chassis system of a motor vehicle and motor vehicle
Procédé destiné au fonctionnement d'un système de châssis actif d'un véhicule automobile et véhicule automobile

(30) Priorität: 07.02.2014 DE 102014001691
(43) Veröffentlichungstag der Anmeldung: 12.08.2015
(73) Patentinhaber: AUDI AG, 85045 Ingolstadt (DE)
(72) Erfinder: Bouzouraa, Mohamed Essayed, DE - 85051 Ingolstadt (DE); Hofmann, Ulrich, DE - 85049 Ingolstadt (DE); Martin, Kellner, DE - 85057 Ingolstadt (DE)
(74) Vertreter: Thielmann, Frank

(56) Entgegenhaltungen:
- EP-A1- 2 614 970
- EP-A2- 0 455 993
- DE-A1-102009 054 460
- DE-A1-102010 044 263
- GB-A- 2 494 528
- US-A- 5 999 868
- US-A- 6 000 703
- US-A1- 2004 046 335
- US-A1- 2013 103 259

## Beschreibung

Die Erfindung betrifft ein Verfahren zum Betrieb eines aktiven Fahrwerksystems eines Kraftfahrzeugs, wobei aus Sensordaten wenigstens eines vorausschauenden Umfeldsensors des Kraftfahrzeugs eine vor dem Kraftfahrzeug liegende, auszugleichende Unebenheiten der Fahrbahn beschreibende Höhenprofilgröße zur Ansteuerung wenigstens eines die Lage des Fahrzeugaufbaus beeinflussenden Aktors ermittelt wird. Daneben betrifft die Erfindung ein Kraftfahrzeug.

Im Stand der Technik sind bereits aktive Fahrwerksysteme bekannt, die Aktoren aufweisen, die Einfluss auf den Fahrzeugaufbau nehmen können. Im Hinblick auf derartige aktive Fahrwerksysteme wurde bereits vorgeschlagen, die Aktoren so anzusteuern, dass das Fahrwerk vorausschauend und aktiv auf Unebenheiten der Fahrbahn reagiert, so dass als Ergebnis eine Beruhigung des Fahrzeugaufbaus und somit eine Erhöhung des Fahrkomforts folgt. Hierfür sind dem aktiven Fahrwerksystem Umfeldsensoren zugeordnet, die die Fahrbahn vor dem Kraftfahrzeug abtasten, um ein Höhenprofil zu ermitteln, welches als Eingangsgröße zur Steuerung der beispielsweise hydraulischen oder elektrischen Aktorik dienen kann. Auf diese Weise können Straßenunebenheiten ausgeglichen werden, indem am Fahrzeugaufbau den durch die Straßenunebenheiten induzierten Bewegungen beziehungsweise Schwingungen entgegengesetzte Bewegungen beziehungsweise Schwingungen erzeugt werden.

Das Dokument US2013/0103259 A1 offenbart ein Verfahren zum Betrieb eines aktiven Fahrwerksystems eines Kraftfahrzeugs nach dem Oberbegriff des Anspruchs 1.

Das Dokument US2004/0046335 A1 offenbart ein anderes Verfahren zum Betrieb eines aktiven Fahrwerksystems eines Kraftfahrzeugs.

Als Umfeldsensoren werden dabei häufig Lasersensoren, 3D-Kameras und dergleichen verwendet, die lediglich eine begrenzte Vorausschau auf die Fahrbahn liefern, typischerweise circa 20 bis 30 Meter vor dem Kraftfahrzeug. Zudem liefern die Umfeldsensoren aufgrund ihrer Einbaulage, beispielsweise hinter der Windschutzscheibe, und aufgrund des beschränkten vertikalen Öffnungswinkels Messungen erst ab einer gewissen Entfernung vor dem Kraftfahrzeug, beispielsweise ab 5 Meter Entfernung vor dem Kraftfahrzeug. Bestimmte Umfeldsensoren, beispielsweise ein Laserscanner als Spezialfall eines Lasersensors, senden wenige Strahlen aus, die auf den Boden auftreffen. Dies erschwert es, aus den wenigen Messpunkten, die durch die Sensordaten beschrieben werden, das tatsächliche Höhenprofil der Fahrbahn zu rekonstruieren.

Die genannten Eigenschaften der Umfeldsensoren haben Nachteile für die Ausregelung der Straßenunebenheiten in einem aktiven Fahrwerksystem zur Folge. So ist es aufgrund der beschränkten Vorausschau praktisch unmöglich, lange Bodenwellen zu erfassen und zu repräsentieren. Dadurch kann das aktive Fahrwerk nicht adäquat auf diese langen Wellen reagieren. Eine Erhöhung des Fahrkomforts in Fahrsituationen auf Autobahnen oder auf Landstraßen, wo diese langen Bodenwellen typischerweise auftreten können, ist deswegen nicht oder nur eingeschränkt möglich. Der Grund hierfür ist darin zu sehen, dass Unebenheiten der Fahrbahn sich in Stößen / Schwingungen des Fahrzeugaufbaus äußern, die erst ab einer bestimmten Frequenz durch die Insassen überhaupt wahrnehmbar sind. Je größer die Geschwindigkeit des Kraftfahrzeugs ist, desto längere Straßenunebenheiten erzeugen Bewegungen beziehungsweise Schwingungen des Fahrzeugaufbaus, die durch den Insassen wahrnehmbar wären, mithin ausgeregelt werden sollten. Allerdings sind diese mit der heutigen Umfeldsensortechnologie nicht mehr in ihrer Gesamtheit zu erfassen, da die Vorausschau nur in einem beschränkten Bereich möglich ist. Ein Problem von Umfeldsensoren, die nur Sensordaten in größeren Abständen liefern, ist, dass die Rekonstruktion des Höhenprofils damit nur schwer oder nicht möglich ist und die Sensordaten für die Ansteuerung des Fahrwerks mithin nicht verwendet werden können.

Der Erfindung liegt daher die Aufgabe zugrunde, eine Möglichkeit zum Betrieb eines aktiven Fahrwerksystems zur Kompensation von Straßenunebenheiten im Fahrzeugaufbau anzugeben, mit dem auch längere Bodenwellen erfasst und ausgeregelt werden können.

Zur Lösung dieser Aufgabe ist bei einem Verfahren der eingangs genannten Art erfindungsgemäß vorgesehen, dass wenigstens ein den nicht auszugleichenden Höhenverlauf der Fahrbahn beschreibendes Bezugsprofil aus aktuell aufgenommenen, einen Vorschaubereich der Fahrbahn vor dem Kraftfahrzeug beschreibenden Sensordaten der Sensoren und aus historischen, einen bereits durch das Kraftfahrzeug überfahrenen Fahrbahnabschnitt beschreibenden Sensordaten ermittelt wird, wobei die Höhenprofilgröße aus einer Differenz zwischen dem Bezugsprofil und dem durch die Sensordaten beschriebenen Höhenprofil für wenigstens einen Teil des Vorschaubereichs ermittelt wird.

Es wird mithin vorgeschlagen, bei der vorausschauenden Rekonstruktion des Höhenprofils der Fahrbahn in der Längsrichtung vor dem Kraftfahrzeug bei Umfeldsensoren mit beschränkter Vorausschau und bei Umfeldsensoren mit weniger dicht vorhandenen Sensordaten durch das Einbeziehen der vergangenen Messungen sowie gegebenenfalls und bevorzugt auch ihrer Unsicherheiten und weiterer Eigenschaften der Messungen (Intensität, Güte, ...) so zu verbessern, dass eine Beschreibung von langen Bodenwellen und deren mittleren Verlauf ermöglicht wird, wobei jedoch berücksichtigt wird, dass nicht jegliche Höhenänderung im Fahrbahnverlauf, wie sie beispielsweise auch durch die Erdoberfläche hervorgerufen sein kann, zu kompensieren ist, sondern nur jener Anteil, der tatsächlich zu durch den Insassen des Kraftfahrzeugs wahrnehmbaren Anregungen des Fahrzeugaufbaus führen würde, wobei die Aktoren so angesteuert werden, dass diesen Anregungen entgegengewirkt wird, mithin die Unebenheiten der Fahrbahn ausgeglichen werden. Mithin stellt das Bezugsprofil den Anteil der Straßenunebenheiten dar, der gerade nicht ausgeglichen werden muss und lediglich dahingehend überhaupt bestimmbar ist, dass ein deutlich größerer Bereich zur Analyse des Höhenprofils der Fahrbahn gegeben ist. Dies wird erreicht, indem auch Sensordaten aus Bereichen, die durch das Kraftfahrzeug bereits überfahren wurden, berücksichtigt werden.

Dabei sei an dieser Stelle noch angemerkt, dass der Begriff der Sensordaten zwar grundsätzlich die Rohdaten der Umfeldsensoren beschreiben kann, jedoch auch aus Rohdaten der Umfeldsensoren extrahierte Merkmale beliebiger Abstraktion, mithin Auswertungsstufen, umfasst. Beispielsweise können die Sensordaten mithin dreidimensionale Messpunkte der Fahrbahn, Mittelwerte von mehreren Messungen und dergleichen umfassen. Insbesondere kann auch mehr als ein Umfeldsensor vorgesehen sein, deren Rohdaten beziehungsweise vorausgewerteten Sensordaten in einem Auswertungsprozess zu gemeinsamen Sensordaten zusammengeführt werden.

Die eigentliche Regelgröße, die Höhenprofilgröße, ergibt sich dann aus der Differenz zwischen dem Bezugsprofil und dem durch die Sensordaten beschriebenen Höhenprofil für wenigstens einen Teil des Vorschaubereichs. Mithin können die Höhenprofilgrößen auch als relative Höhenwerte im Bereich vor dem Kraftfahrzeug bezeichnet werden, die die relevante Höheninformation darstellen, die ausgeregelt werden soll.

Durch die Berücksichtigung der vergangenen Messungen ist es mithin möglich, auch das Straßenhöhenprofil langer Bodenwellen zu rekonstruieren, so dass der mittlere Verlauf der entsprechend detektierten Bodenwellen auch im Vorschaubereich ermittelt werden kann. Die Höhenprofilgröße kann dann relativ zu diesem Bezugsverlauf berechnet werden. Damit ermöglicht es die Erfindung, den Nutzen eines aktiven Fahrwerksystems mit einem vorausschauenden Fahrwerk trotz begrenzter Vorausschau durch die Umfeldsensoren zu erhöhen. Auch erlaubt es die vorliegende Erfindung, einen Umfeldsensor zu benutzen, der weniger dicht die vor dem Kraftfahrzeug liegende Fahrbahn abtastet, beispielsweise einen Laserscanner mit wenigen vertikalen Ebenen, die auf den Boden treffen. Durch das "Sammeln" der Sensordaten über die Zeit entsteht ein detailliertes Bild über das Höhenprofil der Fahrbahn, wodurch mehr Informationen aus den Sensordaten extrahiert werden können.

Dabei kann das erfindungsgemäße Verfahren selbstverständlich vollautomatisch durch ein Steuergerät des aktiven Fahrwerksystems ausgeführt werden. Die Umfeldsensoren liefern ihre Sensordaten über ein Bussystem des Kraftfahrzeugs an das Steuergerät, welches die Sensordaten gemäß der Erfindung verarbeitet und eventuell fusioniert. Aus den schließlich erhaltenen Höhenprofilgrößen werden Ansteuersignale berechnet, die zu den Aktoren des Fahrwerks übertragen werden, so dass die Straßenunebenheiten kompensiert werden können.

Zweckmäßigerweise ist vorgesehen, dass die aktuell aufgenommenen Sensordaten und die historischen Sensordaten unter Berücksichtigung von die Bewegung des Kraftfahrzeugs beschreibenden Dynamikdaten in ein gemeinsames Koordinatensystem, insbesondere ein mit dem Kraftfahrzeug bewegtes Fahrzeugkoordinatensystem, überführt werden. Es wird mithin die Eigenbewegung des Kraftfahrzeugs (6 Freiheitsgrade) berücksichtigt, um alle Sensordaten in einem gemeinsamen Koordinatensystem betrachten zu können. Durch die Kompensation der Eigenbewegung des Kraftfahrzeugs können die Sensordaten konsistent in einem festgelegten Koordinatensystem, bevorzugt dem aktuellen Fahrzeugkoordinatensystem, beschrieben werden. Insbesondere wird eine Verschiebung für die einzelnen Punkte, auf die sich die Sensordaten beziehen, ermittelt.

Eine zweckmäßige Weiterbildung des Verfahrens sieht vor, dass das Bezugsprofil als Teil eines Korridors ermittelt wird, der neben dem Bezugsprofil auch einen horizontalen Fahrbahnverlauf wenigstens bezüglich des Vorschaubereichs umfasst. Dabei können im Übrigen, worauf im Folgenden noch näher eingegangen werden wird, auch mehrere Korridore betrachtet werden, insbesondere jeweils im Bereich der Reifen einer Seite des Kraftfahrzeugs, da dies die (gegebenenfalls unterschiedlich unebenen) Bereiche sind, in denen die Wechselwirkung des Kraftfahrzeugs mit der Fahrbahn stattfindet. Im Rahmen der vorliegenden Erfindung kann es nun vorteilhaft sein, nicht nur das Bezugsprofil, welches den nicht auszugleichenden Anteil der Höhenveränderungen der Fahrbahn beschreibt, zu ermitteln, sondern diesem Bezugsverlauf zugeordnet auch einen horizontalen Fährbahnverlauf zu bestimmen, insbesondere wenigstens für den Vorschaubereich. Ein horizontaler Fahrbahnverlauf kann aus einem Lenkwinkel des Kraftfahrzeugs und/oder Fahrbahnverlaufsdaten eines Navigationssystems ermittelt werden. Selbstverständlich sind auch andere Quellen zur Bestimmung des horizontalen Fahrbahnverlaufs innerhalb eines Korridors, welcher beispielsweise eine bestimmte Breite haben kann, denkbar. Es können auch ein historischer Lenkwinkelverlauf oder insgesamt historische Dynamikdaten berücksichtigt werden, um den horizontalen Fahrbahnverlauf auch für die historischen Sensordaten zu bestimmen. Aus einem aktuellen Lenkwinkel kann jedoch auch geschlossen werden, wie sich das Kraftfahrzeug in der nächsten Zeit voraussichtlich weiterbewegen wird. Andere nützliche Fahrbahnverlaufsdaten stammen aus einem Navigationssystem, in dem der Verlauf der Fahrbahn häufig ohnehin abgebildet ist. Denkbar ist es jedoch auch, beispielsweise die Daten einer Kamera oder dergleichen auszuwerten, insbesondere dann, wenn dies ohnehin durch ein anderes Fahrzeugsystem, beispielsweise einen Spurhalteassistenten, erfolgt.

Die Nutzung eines horizontalen Fahrbahnverlaufs ermöglicht eine Einschränkung der zu bearbeitenden Datenmenge, mithin eine Auswahl von relevanten Sensordaten. So kann beispielsweise vorgesehen sein, dass abhängig von dem horizontalen Fahrbahnverlauf eine Auswahl von Sensordaten wenigstens aus dem Vorschaubereich zur Ermittlung des Bezugsprofils und/oder des Höhenprofils erfolgt. Dem liegt die Erkenntnis zugrunde, dass letztlich lediglich die Betrachtung der Sensordaten für die dreidimensionalen Positionen zweckmäßig ist, die das Kraftfahrzeug auch überfahren hat beziehungsweise überfahren wird. Das bedeutet, es muss nicht das Bezugsprofil und das Höhenprofil für die gesamte Fahrbahn betrachtet werden, sondern lediglich dort, wo es auch für die Ansteuerung und den Ausgleich der Fahrbahnunebenheiten benötigt wird.

Eine besonders vorteilhafte Ausgestaltung der vorliegenden Erfindung sieht vor, dass der Bezugsverlauf durch Regression mittels eines mathematischen Modells und/oder durch eine Tiefpassfilterung der historischen und aktuell aufgenommenen Sensordaten ermittelt wird. Dabei ist die Tiefpassfilterung letztlich auch eine Grundlage des mathematischen Modells, da es ja darum geht, im Bezugsprofil die Höhenveränderungen festzustellen, die vom Fahrer oder einem sonstigen Insassen nicht als Anregungen des Fahrzeugaufbaus spürbar sind. Beispielsweise kann mithin eine Grenzfrequenz für die Tiefpassfilterung betrachtet werden, die im Bereich von 0,5 Hertz liegt, nachdem sich gezeigt hat, dass unterhalb dieser Frequenz liegende Anregungen des Fahrzeugaufbaus vom Fahrer oder sonstigen Insassen nicht als störend empfunden werden. Letztlich entspricht die Ermittlung des Bezugsverlaufs aus den historischen und aktuell aufgenommenen Sensordaten also einer Glättung des Höhenverlaufs, um nicht auszugleichende Unebenheiten der Fahrbahn zu ermitteln, so dass eine hervorragende Grundlage erhalten wird, um die relativen Höhenwerte, mithin die Höhenprofilgröße, zu erhalten, nachdem Einflüsse ohnehin nicht als störend empfundener Anregungen nicht vorliegen. Dabei sei an dieser Stelle darauf hingewiesen, dass auch eine Interpolation im Rahmen der Ermittlung des Bezugsverlaufs durchaus möglich ist, falls in bestimmten Bereichen nur mit großen Abständen Sensordaten vorliegen und/oder diese aus anderen Gründen ausgeschlossen oder gering gewichtet werden müssen.

Hierbei kann vorgesehen sein, dass das mathematische Modell ein Polynommodell oder ein Polygonzug mit stückweisen Sigmoiden ist. Um auch für einen derartigen Fitvorgang (Regression) die Tiefpassfilterung zu realisieren, sind geeignete Funktionen, an die das Höhenprofil angefittet wird, auszuwählen, wobei sich Polynommodelle oder auch Polygonzüge mit stückweisen Sigmoiden besonders anbieten. Ferner kann eine Einschränkung des Parameterraums für die Fitparameter erfolgen, so dass tatsächlich nur langreichweitige, langsame Änderungen der Höhe der Fahrbahn tatsächlich im Bezugsverlauf erhalten bleiben. Zur Ermittlung des Bezugsverlaufs können allgemein bekannte Techniken eingesetzt werden.

Eine besonders bevorzugte Ausgestaltung der vorliegenden Erfindung sieht vor, dass bei der Ermittlung des Bezugsverlaufs zusätzlich wenigstens ein eine Messeigenschaft der einzelnen Sensordaten beschreibender Messeigenschaftswert berücksichtigt wird, insbesondere hinsichtlich einer Gewichtung einzelner Sensordaten. Wie aus der Informationstheorie allgemein bekannt, ist eine Verbesserung der Ermittlung des Bezugsverlaufs und letztlich auch der Höhenprofilgröße möglich, wenn Eigenschaften der Messung der Sensordaten in die Berechnungen miteinbezogen werden. Dabei können als Messeigenschaften beispielsweise Nachbarschaftsbeziehungen zwischen Sensordaten und/oder die Qualität der Messung und/oder der Messzeitpunkt berücksichtigt werden. So ist es beispielsweise denkbar, mit einem größeren Fehler behaftete Messpunkte weniger stark zu gewichten als einen mit einem geringeren Fehler behafteten Messpunkt und dergleichen. So werden insgesamt alle verfügbaren Informationen genutzt, um einen möglich exakten Bezugsverlauf und möglichst exakte Höhenprofilgrößen zu bestimmen. So wird, allgemein gesagt, letztlich ein Bezugsverlauf erhalten, der auch als das Sollverhalten des Fahrzeugaufbaus betrachtet werden kann, woraus sich die vorgesehene Ermittlung der Höhenprofilgrößen als relative Höhenwerte ergibt. Das Sollverhalten ist dabei mithin niederfrequent, also das Ergebnis einer Tiefpassfilterung.

Es sei an dieser Stelle noch darauf hingewiesen, dass die Berücksichtigung von Messeigenschaften selbstverständlich auch bei anderen Ermittlungen im Rahmen der vorliegenden Erfindung berücksichtigt werden können, beispielsweise bei der Ermittlung eines horizontalen Fahrbahnverlaufs.

Die Länge des bereits durch das Kraftfahrzeug überfahrenen Fahrbahnabschnitts kann in Abhängigkeit von der Geschwindigkeit und/oder einer Grenzfrequenz ermittelt werden. Je länger die Bodenwellen sind, die detektiert werden sollen, desto größer die benötigte Gesamtlänge, über die Sensordaten vorliegen. Nachdem es im Rahmen der vorliegenden Erfindung darum geht, von Insassen des Kraftfahrzeugs als störend empfundene Anregungen des Fahrzeugaufbaus durch Straßenunebenheiten zu vermeiden, können jene beispielsweise durch eine Grenzfrequenz für die Anregungen beschrieben werden, aus der gemeinsam mit der aktuellen Geschwindigkeit des Kraftfahrzeugs eine Länge des insgesamt zu betrachtenden Bereichs, aus dem Sensordaten betrachtet werden, gefolgert werden kann. Insbesondere kann die hinter dem Kraftfahrzeug betrachtete Länge proportional zur Geschwindigkeit gewählt werden, bei einer hohen Geschwindigkeit also ein größerer Gesamtbereich betrachtet werden als bei einer niedrigen Geschwindigkeit. Denkbar ist es im Übrigen auch, die Gesamtlänge, über die Sensordaten betrachtet werden, so zu wählen, dass lediglich noch zu oberhalb der Grenzfrequenz liegenden Frequenzen führende Straßenunebenheiten berücksichtigt werden, wobei dann die Bestimmung des Bezugsverlaufs auch durch eine lineare Regression denkbar ist.

Wie bereits angedeutet wurde, kann vorgesehen sein, dass mehrere Bezugsprofile, insbesondere Bezugsprofile für den Bereich der Reifen an beiden Seiten des Kraftfahrzeugs, und entsprechend Höhenprofilgrößen für die mehreren Bezugsprofile bestimmt werden. Nachdem sich Straßenunebenheiten auf unterschiedlichen Seiten der Fahrbahn unterscheiden können, mithin unterschiedliche Anregungen bei Rädern unterschiedlicher Seiten des Kraftfahrzeugs entstehen können, kann es zweckmäßig sein, die seitlichen Bereiche des Kraftfahrzeugs, die mit der Fahrbahn in Kontakt kommen, getrennt zu betrachten. Zweckmäßigerweise können Korridore für beide Seiten des Kraftfahrzeugs definiert werden, wobei es zudem zweckmäßig sein kann, auch für die Mitte des Kraftfahrzeugs einen Korridor zu betrachten und zu analysieren, um beispielsweise Übergänge zwischen den äußeren Korridoren analysieren zu können und dergleichen.

Zweckmäßig ist es ferner, wenn die Höhenprofilgrößen vor der Verwendung zur Ansteuerung der Aktoren zeitlich gefiltert werden. Eine derartige zeitliche Filterung kann mittels aus dem Stand der Technik bekannter Schätzmechanismen erfolgen, so dass eine Reduzierung des Sensorrauschens möglich ist.

Als Umfeldsensor kann wenigstens ein Radarsensor und/oder wenigstens ein Lasersensor und/oder wenigstens eine insbesondere dreidimensionale Daten liefernde Kamera verwendet werden. Dabei ist das erfindungsgemäße Verfahren besonders vorteilhaft einsetzbar, wenn eine eher geringe Vorausschauweite besteht, eignet sich mithin besonders für den Einsatz von Lasersensoren, insbesondere Laserscannern, und/oder 3D-Kameras.

Neben dem Verfahren betrifft die Erfindung auch ein Kraftfahrzeug, aufweisend wenigstens.einen Umfeldsensor, wenigstens einen Aktor und ein aktives Fahrwerksystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin dieselben Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan des erfindungsgemäßen Verfahrens,
- Fig. 2: eine Skizze zu Messungen im Vorschaubereich,
- Fig. 3: eine Skizze zur Ermittlung des Bezugsprofils,
- Fig. 4: ein erfindungsgemäßes Kraftfahrzeug, und
- Fig. 5: Erfassungsbereiche im erfindungsgemäßen Kraftfahrzeug.

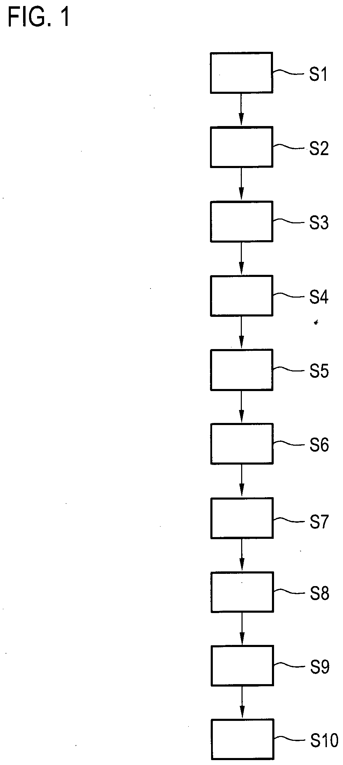

Fig. 1 zeigt einen Ablaufplan des erfindungsgemäßen Verfahrens zum Betrieb eines aktiven Fahrwerksystems eines Kraftfahrzeugs, bei dem Unebenheiten der Straße, die zu störenden Anregungen des Fahrzeugaufbaus führen, kompensiert werden sollen. Hierzu wird ein Bezugsprofil ermittelt, das ein niederfrequentes Sollverhalten des Fahrzeugaufbaus beschreibt. Um dies zu ermöglichen, werden aktuell aufgenommene Sensordaten und historische Sensordaten von Umgebungssensoren zusammengeführt.

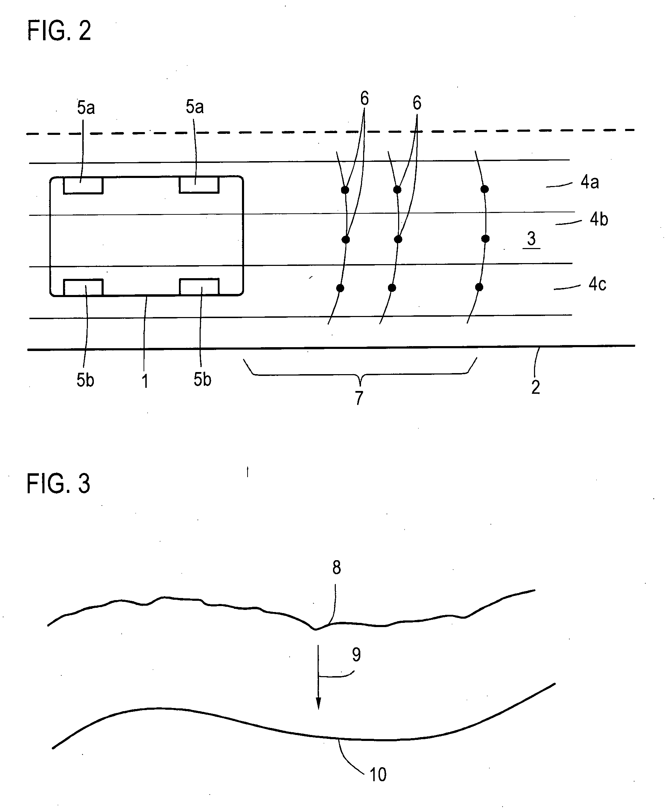

Zunächst werden in einem Schritt S1 Rohdaten der Umfeldsensoren aufgenommen. Dies ist schematisch durch Fig. 2 angedeutet. Dort befindet sich ein erfindungsgemäßes Kraftfahrzeug 1 auf einer Straße 2, die die Fahrbahn 3 bildet. Eingezeichnet in Fig. 2 sind auch bereits Korridore 4a, 4b und 4c, wobei sich der Korridor 4a auf die linken Reifen 5a des Kraftfahrzeugs 1 bezieht, der Korridor 4c auf die rechten Reifen 5b des Kraftfahrzeugs 1. Der mittlere Korridor 4b betrifft die Mitte des Kraftfahrzeugs.

Durch die Umgebungssensoren des Kraftfahrzeugs 1 werden Messpunkte 6 der Fahrbahnoberfläche in einem bestimmten Vorschaubereich 7 abgetastet.

In einem Schritt S2 werden die Rohdaten ausgewertet, vorwiegend auf die 3D-Positionen von Oberflächenpunkten der Fahrbahn 3, die auch als Bodenpunkte bezeichnet werden können. Zudem liegen zu den Sensordaten Messeigenschaftswerte vor, die Messeigenschaften beschreiben, beispielsweise die Qualität der Messung, letztlich also auch deren abgeschätzten Fehler, Nachbarschaftsbeziehungen zwischen Sensordaten und den Messzeitpunkt.

In einem Schritt S3 werden die Sensordaten, falls notwendig, in das Fahrzeugkoordinatensystem übertragen, so dass mithin die dreidimensionale Position der Bodenpunkte in dem Fahrzeugkoordinatensystem vorliegt. Dieser Schritt ist optional und kann wegfallen, wenn in Schritt S2 die Sensordaten ohnehin im Fahrzeugkoordinatensystem ermittelt werden.

In einem Schritt S4 erfolgt die Definition der Korridore 4a, 4b und 4c. Dabei können der aktuelle Lenkwinkel des Kraftfahrzeugs 1, aber auch Fahrbahnverlaufsdaten eines Navigationssystems des Kraftfahrzeugs 1 berücksichtigt werden. Ebenso möglich ist eine anderweitige Auswertung der Rohdaten der Umfeldsensoren. Optional werden die Korridore 4a, 4b und 4c, die durch einen horizontalen Fahrbahnverlauf beschrieben sind, auch für Bereiche hinter dem Kraftfahrzeug ermittelt, wobei wiederum Fahrbahnverlaufsdaten des Navigationssystems und/oder Fahrdynamikdaten, die die vergangene Bewegung des Kraftfahrzeugs beschreiben, berücksichtigt werden können. Nachdem der horizontale Fahrbahnverlauf der Korridore 4a, 4b, 4c dennoch um das vertikale Bezugsprofil ergänzt werden wird, bekannt ist, kann eine Auswahl von relevanten Sensordaten erfolgen, insbesondere wenigstens für den Vorschaubereich 7, nachdem insbesondere relevante Sensordaten der Vergangenheit aus vorausgegangen Ermittlungen von Bezugsprofilen bereits ohnehin bekannt sind.

In einem Schritt S5 werden nun die Eigenbewegung des Kraftfahrzeugs beschreibende Fahrdynamikdaten verwendet, um historische Sensordaten der Korridore 4a, 4b, 4c in das Fahrzeugkoordinatensystem umzurechnen, so dass mithin die aktuell aufgenommenen Sensordaten und die historischen Sensordaten in einem gemeinsamen Koordinatensystem vorliegen. Dabei wird eine gewisse Rückschaulänge des von dem Kraftfahrzeug 1 bereits überfahrenen Fahrbahnabschnitts herangezogen, die sich vorliegend aus einer Grenzfrequenz und der aktuellen Geschwindigkeit des Kraftfahrzeugs ergibt. Die Grenzfrequenz gibt dabei an, ab welcher Frequenz Anregungen durch Fahrbahnunebenheiten vom Fahrer als störend empfunden werden.

Entsprechend werden in einem Schritt S6 die Sensordaten in die Korridore 4a, 4b, 4c einsortiert und alte Sensordaten, die aufgrund der Rückschaulängen nicht mehr benötigt werden, entfernt. Somit liegen nun für jeden Korridor 4a, 4b und 4c aktuell aufgenommene und historische Sensordaten vor, die im vorliegenden Ausführungsbeispiel dreidimensionale Bodenpunkte der Fahrbahn 3 beschreiben; das bedeutet, die vertikalen Positionen dieser Bodenpunkte beschreiben das Höhenprofil der Fahrbahn 3.

In einem Schritt S7 werden die Sensordaten nun ausgewertet, um das Bezugsprofil zu bestimmen. Dies sei durch die Prinzipskizze in Fig. 3 näher erläutert. Dort ist zunächst das sich aus den historischen und aktuell aufgenommenen Sensordaten ergebende Höhenprofil 8 gezeigt, welches offensichtlich eine Vielzahl von Straßenunebenheiten enthält. Nicht alle diese Straßenunebenheiten führen jedoch zu störenden Anregungen des Fahrzeugaufbaus, so dass das Höhenprofil 8 gemäß dem Pfeil 9 einer Tiefpassfilterung unterzogen wird, woraus das geglättete Bezugsprofil 10 resultiert, welches das niederfrequente Sollverhalten des Fahrzeugaufbaus für den jeweiligen Korridor 4a, 4b oder 4c beschreibt. Die Tiefpassfilterung kann dabei beispielsweise mit einer Grenzfrequenz von 0,5 Hz erfolgen. Alternativ zu einer Tiefpassfilterung kann gemäß dem Pfeil 9 auch eine Regression erfolgen, indem das durch die Sensordaten beschriebene Höhenprofil an ein mathematisches Modell angefittet wird, wobei dieser Regressionsvorgang selbstverständlich auch die Glättung und den Ausschluss von Frequenzen oberhalb der Grenzfrequenz betrifft. Als mathematisches Modell kann beispielsweise ein Polynommodell oder ein Polygonzug, in dem stückweise Sigmoiden die Abschnitte beschreiben, verwendet werden.

Dabei wird bei der Ermittlung des Bezugsprofils auch eine Gewichtung einzelner Sensordaten in Abhängigkeit von den Messeigenschaftswerten vorgenommen, wie dies aus dem Bereich der Informationstheorie grundsätzlich bekannt ist. Beispielsweise werden mit hohem Fehler und/oder geringer Qualität aufgenommene Sensordaten niedriger bewertet als mit geringem Fehler und/oder hoher Qualität aufgenommene Sensordaten.

In einem Schritt S8 wird eine Höhenprofilgröße aus einer Differenz zwischen dem Bezugsprofil 10 und dem durch die Sensordaten beschriebenen Höhenprofil 8 für zumindest einen Teil des Vorschaubereichs 7 ermittelt. Es werden also relative Höhenwerte bestimmt, die nach Abzug des Sollverhaltens des Fahrzeugaufbaus noch auszugleichen sind.

Die Höhenprofilgrößen werden, wie dies aus dem Stand der Technik grundsätzlich bekannt ist, in einem Schritt S9 noch zeitlich gefiltert, um Effekte des Sensorrauschens zu reduzieren.

In einem Schritt S10 wird die Höhenprofilgröße dann genutzt, um die Lage des Fahrzeugaufbaus beeinflussende Aktoren derart anzusteuern, dass die durch die Höhenprofilgröße beschriebenen Unebenheiten der Fahrbahn 3 beziehungsweise die von ihnen ausgelösten Anregungen des Fahrzeugaufbaus kompensiert werden.

Selbstverständlich wird das durch die Schritte S1 bis S10 beschriebene Verfahren zyklisch wiederholt, um immer aktuelle Auswertungen vorliegen zu haben.

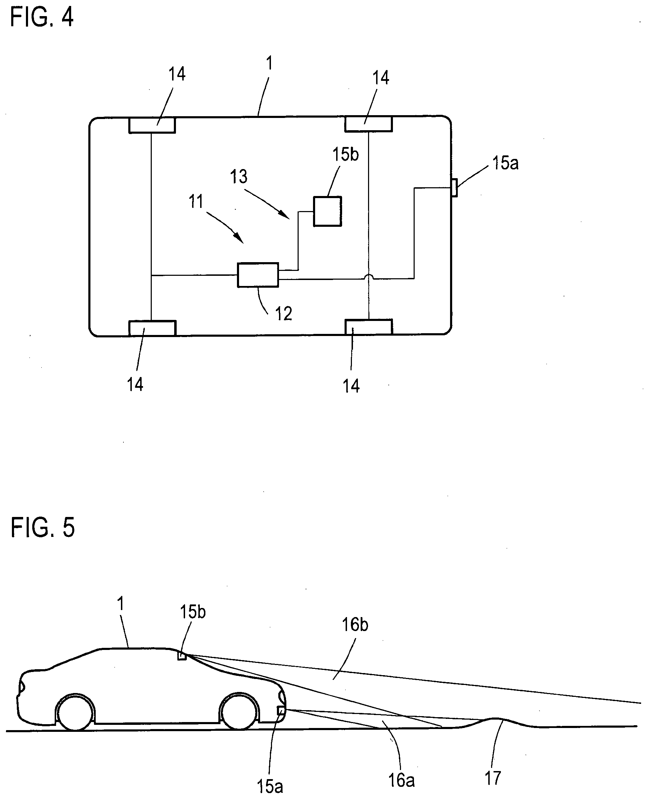

Fig. 4 zeigt eine Prinzipskizze des erfindungsgemäßen Kraftfahrzeugs 1. Dieses weist ein aktives Fahrwerksystem 11 mit einem zur Durchführung des erfindungsgemäßen Verfahrens ausgebildeten Steuergerät 12 auf. Über ein Bussystem 13, beispielsweise einen CAN-Bus, ist das Steuergerät 12 mit Aktoren 14 des Fahrwerks und Umfeldsensoren 15a, 15b verbunden, wobei es sich vorliegend bei dem Umfeldsensor 15a um einen Laserscanner, beim dem Umfeldsensor 15b um eine 3D-Kamera handelt.

Fig. 5 zeigt die Erfassungsbereiche 16a und 16b der Umfeldsensoren 15a und 15b nochmals genauer. Ersichtlich liegt eine beschränkte Vorausschauweite vor. Beispielhaft ist zudem eine erfassbare Straßenunebenheit 17 gezeigt.

Die Aktoren 14 werden aufgrund der für die Korridore 4a, 4c ermittelten Höhenprofilgrößen durch die Steuergerät 12 angesteuert, um Straßenunebenheiten wie die Straßenunebenheit 17 auszugleichen und einen komfortablen Betrieb des Kraftfahrzeugs 1 zu ermöglichen.

## Patentansprüche

1. Verfahren zum Betrieb eines aktiven Fahrwerksystems (11) eines Kraftfahrzeugs (1), wobei aus Sensordaten wenigstens eines vorausschauenden Umfeldsensors (5a, 5b) des Kraftfahrzeugs (1) eine vor dem Kraftfahrzeug (1) liegende, auszugleichende Unebenheiten (17) der Fahrbahn (3) beschreibende Höhenprofilgröße zur Ansteuerung wenigstens eines die Lage des Fahrzeugaufbaus beeinflussenden Aktors (14) ermittelt wird,
**dadurch gekennzeichnet,**
**dass** wenigstens ein den nicht auszugleichenden Höhenverlauf der Fahrbahn (3) beschreibendes Bezugsprofil (10) aus aktuell aufgenommenen, einen Vorschaubereich (7) der Fahrbahn (3) vor dem Kraftfahrzeug (1) beschreibenden Sensordaten der Umfeldsensoren (5a, 5b) und aus historischen, einen bereits durch das Kraftfahrzeug (1) überfahrenen Fahrbahnabschnitt beschreibenden Sensordaten ermittelt wird, wobei die Höhenprofilgröße aus einer Differenz zwischen dem Bezugsprofil (10) und dem durch die Sensordaten beschriebenen Höhenprofil (8) für wenigstens einen Teil des Vorschaubereichs (7) ermittelt wird.

2. Verfahren nach Anspruch 1, **dadurch gekennzeichnet, dass** die aktuell aufgenommenen Sensordaten und die historischen Sensordaten unter Berücksichtigung von die Bewegung des Kraftfahrzeugs (1) beschreibenden Dynamikdaten in ein gemeinsames Koordinatensystem, insbesondere ein mit dem Kraftfahrzeug (1) bewegtes Fahrzeugkoordinatensystem, überführt werden.

3. Verfahren nach Anspruch 1 oder 2, **dadurch gekennzeichnet, dass** das Bezugsprofil (10) als Teil eines Korridors (4a, 4b, 4c) ermittelt wird, der neben dem Bezugsprofil (10) auch einen horizontalen Fahrbahnverlauf wenigstens bezüglich des Vorschaubereichs (7) umfasst.

4. Verfahren nach Anspruch 3, **dadurch gekennzeichnet, dass** der horizontale Fahrbahnverlauf aus einem Lenkwinkel des Kraftfahrzeugs (1) und/oder Fahrbahnverlaufsdaten eines Navigationssystems ermittelt wird.

5. Verfahren nach Anspruch 3 oder 4, **dadurch gekennzeichnet, dass** abhängig von dem horizontalen Fahrbahnverlauf eine Auswahl von Sensordaten wenigstens aus dem Vorschaubereich (7) zur Ermittlung des Bezugsprofils (10) und/oder des Höhenprofils (8) erfolgt.

6. Verfahren nach einem der vorangehenden Ansprüche, **dadurch gekennzeichnet, dass** das Bezugsprofil (10) durch Regression mittels eines mathematischen Modells und/oder durch eine Tiefpassfilterung der historischen und aktuell aufgenommenen Sensordaten ermittelt wird.

7. Verfahren nach Anspruch 6, **dadurch gekennzeichnet, dass** das mathematische Modell ein Polynommodell oder ein Polygonzug mit stückweisen Sigmoiden ist.

8. Verfahren nach einem der vorangehenden Ansprüche, **dadurch gekennzeichnet, dass** bei der Ermittlung des Bezugsprofils (10) zusätzlich wenigstens ein eine Messeigenschaft der einzelnen Sensordaten beschreibender Messeigenschaftswert berücksichtigt wird, insbesondere hinsichtlich einer Gewichtung einzelner Sensordaten.

9. Verfahren nach Anspruch 8, **dadurch gekennzeichnet, dass** als Messeigenschaften Nachbarschaftsbeziehungen zwischen Sensordaten und/oder die Qualität der Messung und/oder der Messzeitpunkt berücksichtigt werden.

10. Verfahren nach einem der vorangehenden Ansprüche, **dadurch gekennzeichnet, dass** die Länge des bereits durch das Kraftfahrzeug (1) überfahrenen Fahrbahnabschnitts in Abhängigkeit von der Geschwindigkeit und/oder einer Grenzfrequenz ermittelt wird.

11. Verfahren nach einem der vorangehenden Ansprüche, **dadurch gekennzeichnet, dass** mehrere Bezugsprofile (10), insbesondere Bezugsprofile (10) für den Bereich der Reifen (5a, 5b) an beiden Seiten des Kraftfahrzeugs (1), und entsprechend Höhenprofilgrößen für die mehreren Bezugsprofile (10) bestimmt werden.

12. Verfahren nach einem der vorangehenden Ansprüche, **dadurch gekennzeichnet, dass** die Höhenprofilgrößen vor der Verwendung zur Ansteuerung der Aktoren (14) zeitlich gefiltert werden.

13. Verfahren nach einem der vorangehenden Ansprüche, **dadurch gekennzeichnet, dass** als Umfeldsensor (5a, 5b) wenigstens ein Radarsensor und/oder wenigstens ein Lasersensor und/oder wenigstens eine insbesondere dreidimensionale Daten liefernde Kamera verwendet werden.

14. Kraftfahrzeug (1), aufweisend wenigstens einen Umfeldsensor (5a, 5b), wenigstens einen Aktor (14) und ein aktives Fahrwerksystem (11) mit einem zur Durchführung eines Verfahrens nach einem der vorangehenden Ansprüche ausgebildeten Steuergerät (12).

## Claims

1. Method for operating an active chassis system (11) of a motor vehicle (1), wherein from sensor data of at least one ahead-looking environment sensor (5a, 5b) of the motor vehicle (1) a height profile size, describing unevennesses (17) of the road (3) for which compensation is to be made, said unevennesses lying in front of the motor vehicle (1), is determined for actuating at least one actuator (14) influencing the position of the vehicle body,
**characterised in that**
at least one reference profile (10), describing the height course of the road (3) for which compensation is not to be made, is determined from currently received sensor data from the environment sensors (5a, 5b), said data describing an ahead-looking area (7) of the road (3) in front of the motor vehicle (1), and from historical sensor data describing a route section which has already been traversed by the motor vehicle (1), wherein the height profile size is determined from a difference between the reference profile (10) and the height profile (8) described by means of the sensor data for at least one part of the ahead-looking area (7).

2. Method according to claim 1, **characterised in that** the currently received sensor data and the historical sensor data are transferred into a shared coordinate system, in particular a vehicle coordinate system moved with the motor vehicle (1), taking into account dynamic data describing the movement of the motor vehicle (1).

3. Method according to claim 1 or 2, **characterised in that** the reference profile (10) is determined as part of a corridor (4a, 4b, 4c) which in addition to the reference profile (10) also comprises a horizontal road course at least with respect to the ahead-looking area (7).

4. Method according to claim 3, **characterised in that** the horizontal road course is determined from a steering angle of the motor vehicle (1) and/or road course data from a navigation system.

5. Method according to claim 3 or 4, **characterised in that** depending on the horizontal road course there results a selection from sensor data at least from the ahead-looking area (7) for determining the reference profile (10) and/or the height profile (8).

6. Method according to one of the preceding claims, **characterised in that** the reference profile (10) is determined by regression by means of a mathematical model and/or by means of a low-pass filtering of the historical and currently received sensor data.

7. Method according to claim 6, **characterised in that** the mathematical model is a polynomial model or a polygonal course with piece -wise sigmoids.

8. Method according to one of the preceding claims, **characterised in that** in determining the reference profile (10) in addition at least one measurement characteristic value, describing a measurement characteristic of the individual sensor data, is taken into consideration, in particular with respect to a weighting of individual sensor data.

9. Method according to claim 8, **characterised in that** neighbourly relationships between sensor data and/or the quality of the measurement and/or the point in time of the measurement are taken into consideration as measurement characteristics.

10. Method according to one of the preceding claims, **characterised in that** the length of the road section already traversed by the motor vehicle (1) is determined depending on the speed and/or a frequency limit.

11. Method according to one of the preceding claims, **characterised in that** a plurality of reference profiles (10) is determined, in particular reference profiles (10) for the area of the wheels (5a, 5b) at both sides of the motor vehicle (1) and corresponding height profile sizes for the plurality of reference profiles (10).

12. Method according to one of the preceding claims, **characterised in that** the height profile sizes are chronologically filtered prior to the use for actuating the actuators (14).

13. Method according to one of the preceding claims, **characterised in that** as environment sensor (5a, 5b) are used at least one radar sensor and/or at least one laser sensor and/or at least one camera delivering in particular three-dimensional data.

14. Motor vehicle (1) having at least one environment sensor (5a, 5b), at least one actuator (14) and an active chassis system (11) with a control device (12) designed to carry out the method according to one of the preceding claims.

## Revendications

1. Procédé servant à faire fonctionner un système de train de roulement (11) actif d'un véhicule automobile (1), dans lequel une dimension de profil en hauteur située devant le véhicule automobile (1), décrivant des irrégularités (17) à compenser de la chaussée (3), servant à piloter au moins un actionneur (14) influençant la position de la carrosserie de véhicule est déterminée à partir de données de capteur d'au moins un capteur d'environnement (5a, 5b) de prévision du véhicule automobile (1),
**caractérisé en ce**
**qu'**au moins un profil de référence (10) décrivant le tracé en hauteur qui ne doit pas être compensé de la chaussée (3) est déterminé à partir de données de capteur, relevées de manière instantanée, décrivant une plage de prévision (7) de la chaussée (3) devant le véhicule automobile (1), des capteurs d'environnement (5a, 5b) et à partir de données de capteur historiques, décrivant une portion de chaussée déjà empruntée par le véhicule automobile (1), dans lequel la dimension de profil en hauteur est déterminée à partir d'une différence entre le profil de référence (10) et le profil en hauteur (8) décrit par les données de capteur pour au moins une partie de la plage de prévision (7).

2. Procédé selon la revendication 1, **caractérisé en ce que** les données de capteur relevées de manière instantanée et les données de capteur historiques sont transférées dans un système de coordonnées commun, en particulier un système de coordonnées de véhicule en mouvement avec le véhicule automobile (1) en tenant compte de données dynamiques décrivant le mouvement du véhicule automobile (1).

3. Procédé selon la revendication 1 ou 2, **caractérisé en ce que** le profil de référence (10) est déterminé comme une partie d'un corridor (4a, 4b, 4c), qui comprend, outre le profil de référence (10), également un tracé de chaussée horizontal au moins par rapport à la plage de prévision (7).

4. Procédé selon la revendication 3, **caractérisé en ce que** le tracé de chaussée horizontal est déterminé à partir d'un angle de braquage du véhicule automobile (1) et/ou de données de tracé de chaussée d'un système de navigation.

5. Procédé selon la revendication 3 ou 4, **caractérisé en ce qu'**en fonction du tracé de chaussée horizontal, une sélection de données de capteur est effectuée au moins parmi la plage de prévision (7) pour déterminer le profil de référence (10) et/ou le profil en hauteur (8).

6. Procédé selon l'une quelconque des revendications précédentes, **caractérisé en ce que** le profil de référence (10) est déterminé par régression au moyen d'un modèle mathématique et/ou par une filtration par le filtre passe-bas des données de capteur historiques et relevées de manière instantanée.

7. Procédé selon la revendication 6, **caractérisé en ce que** le modèle mathématique est un modèle polynomial ou un contour polygonal avec des sigmoïdes individuels.

8. Procédé selon l'une quelconque des revendications précédentes, **caractérisé en ce que** lors de la détermination du profil de référence (10), en supplément au moins une valeur de propriété de mesure décrivant une propriété de mesure des diverses données de capteur est prise en compte, en particulier eu égard à la pondération de diverses données de capteur.

9. Procédé selon la revendication 8, **caractérisé en ce que** des relations de voisinage entre des données de capteur et/ou la qualité de la mesure et/ou le moment de mesure sont prises en compte en tant que propriétés de mesure.

10. Procédé selon l'une quelconque des revendications précédentes, **caractérisé en ce que** la longueur de la portion de chaussée déjà empruntée par le véhicule automobile (1) est déterminée en fonction de la vitesse et/ou d'une fréquence limite.

11. Procédé selon l'une quelconque des revendications précédentes, **caractérisé en ce que** plusieurs profils de référence (10), en particulier des profils de référence (10) pour la zone des pneus (5a, 5b) au niveau des deux côtés du véhicule automobile (1), et, de manière correspondante, des grandeurs de profil en hauteur pour les nombreux profils de référence (10) sont définis.

12. Procédé selon l'une quelconque des revendications précédentes, **caractérisé en ce que** les dimensions de profil en hauteur sont filtrées de manière temporelle avant l'utilisation aux fins du pilotage des actionneurs (14).

13. Procédé selon l'une quelconque des revendications précédentes, **caractérisé en ce que** sont utilisés en tant que capteur d'environnement (5a, 5b) au moins un capteur radar et/ou au moins un capteur laser et/ou au moins une caméra fournissant en particulier des données tridimensionnelles.

14. Véhicule automobile (1), présentant au moins un capteur d'environnement (5a, 5b), au moins un actionneur (14) et un système de train de roulement (11) actif avec un appareil de commande (12) réalisé pour mettre en oeuvre un procédé selon l'une quelconque des revendications précédentes.
